# EUROPEAN PATENT SPECIFICATION

(11) **EP 1 799 045 B1**
(45) Date of publication and mention of the grant of the patent: **23.11.2011**
(21) Application number: 05797593.0
(22) Date of filing: 04.10.2005
(51) Int. Cl.: A23G 9/00

(54) **ROTATABLE FROZEN CONFECTION AND SUPPORT**
DREHBARES GEFRORENES KONFEKTPRODUKT UND TRÄGER
CONFISERIE GLACEE POUVANT ETRE TOURNEE ET SUPPORT

(30) Priority: 08.10.2004 CL 26012004
(43) Date of publication of application: 27.06.2007
(73) Proprietor: Nestec S.A., 1800 Vevey (CH)
(72) Inventor: MEDINA-QUINTANILLA, Tao, Cristobal, Santiago (CL)
(74) Representative: Baumgartner Harris, Pauline
(86) International application number: PCT/EP2005/010665
(87) International publication number: WO 2006/037601

(56) References cited:
- US-A- 2 799 587
- US-A- 5 391 107
- US-A- 5 957 746
- US-A- 5 971 829
- US-A- 6 074 266
- US-A1- 2002 102 903
- US-A1- 2003 068 412
- US-A1- 2004 156 955
- US-B1- 6 221 409

## Description

### Technical field

The subject of the present invention is a device that can be used to rotate an object such as a frozen confection and is a packaging support for that frozen confection. Thus the invention also relates to a frozen confection product having a stick that supports a frozen confection and enables the user to rotate the product as desired while it is consumed.

### Background

A wide variety of articles for consumption by a user that are supported by various types of wooden or plastic holder-sticks are currently available on the market. when consuming a frozen dessert in a constant and regular manner, the user has to rotate the frozen dessert by hand in order to get access to all sides of the dessert. Rotating the dessert by hand is inconvenient and has the risk that the frozen dessert may be dropped or drip and perhaps stain clothing.

Thus there is a need for improved devices to support articles for comsumption that do not require rotating the dessert by hand.

US-A-5 209 692, 5 391 107 and 5 676 988 are concerned with battery-operated candy holding devices. US-A-5 676 988 further discloses a toy in the form of a flying disc which can be connected to a spinner end. All these candy holder devices are complicate and voluminous.

US 2004/ 0156955 is also directed to a candy sucker article and discloses a a device for rotating candies with a holder stick for supporting the candy. The holder stick is fixed to the candy, and a handle is fixed to the lower part of a rotating device which included a rotating spindle having an aperture to receie the candy's holder stick. A crank which is configured to rotate the spindle is provided.

US 5,957,746 discloses a manually operable device for holding and rotating a candy sucker or lollipop in the form of a disc around an axis perpendicular to a handle element or portion or around a vertical axis.

US 2003/068412 also discloses a device for holding and rotating a candy which uses a relatively complex mechanism.

In the art of making ice cream and water ice stick lollies, it is essential that the sticks are of compact shape in order to be able to fit in a stick bar production line. Thus, in that prior art the body of the holder is either far to complicate, voluminous and heavy to be able to suit the requirements for handling ice lollies in food manufacturing lines. Furthermore, the electrically powered arrangement with battery, electrical circuit and motor would not be compatible with frozen confections manufacturing wet environment.

US-A-6 221 409 is concerned with a rotatable support for a frozen confection in the form of a stick assembly which, in addition to allowing to rotate an ice lolly on a support stick for consumption has a play value for kids in that, after consumption the stick-assembly can receive a spinning top or a flying toy. A problem is that the stick assembly alone is composed of six different parts, some of which are rotative and others are fixed, which must be assembled at the production site in the plastic stick manufacturing factory and adds complexity and costs. On top of this, the stick is adapted to ball-shaped ice lollies with the objective that the product is consumed while being turned in the mouth, and therefore the stick cannot receive an elongated ice bar, which would be suited to regular stick bar moulding lines. Another problem is that the system has two functions which are somewhat contradictory the one to the other, on the on hand bearing a high speed rotary toy and on the other hand allowing slow rotation during consumption., which functions are not always well used by the consumer, the kids tend to rotate the ice lolly at too high a speed before or during consumption with the consequence of dripping, spillage and possibly clothing staining.

The present invention eliminates the drawbacks of the previous stick assemblies.

### Summary of the invention

The present invention thus relates to a device for rotating a frozen confection item comprising:
a holder -stick for supporting the frozen confection item fixed to the frozen confection item;
a handle rotatably attached to the holder-stick for holding the frozen confection with one hand and
a crank fixedly attached to the holder-stick for rotating the holder-stick with the other hand.

The invention further relates to a packaged frozen confection product comprising:
a frozen confection item;
a holder-stick for supporting the frozen confection item fixed to the frozen confection item;
in combination with:
   a handle rotatably attachable to the holder-stick for holding the frozen confection with one hand and
   a crank fixedly attachable to the holder-stick for rotating the holder-stick with the other hand.

### Brief description of the drawings

The following drawings illustrate as a non-limiting example a preferred embodiment of the invention, in which
FIG. 1 shows an exploded view in perspective of the frozen confection rotating device in three parts 1, the crank, 2, the holder-stick and 3, the handle;
FIG. 2 is a view in elevation of parts 2 and 3, showing how the holder-stick 2 is introduced into the handle 3;

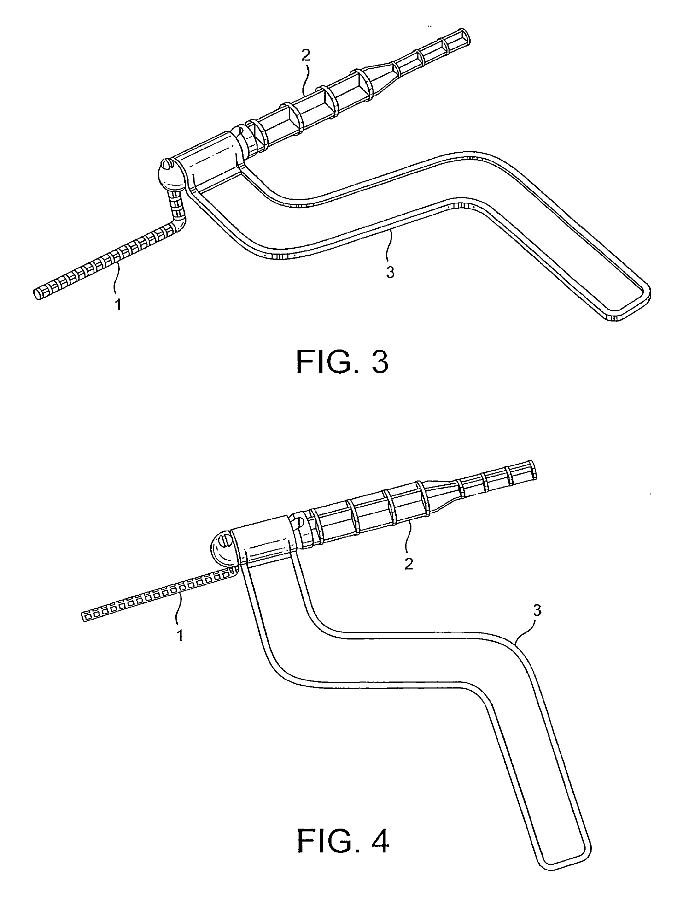

FIG. 3 and 4 are views, in perspective under different angles of the assembled rotating device;
FIG. 5 shows a detailed view in elevation of the way parts 1 and 3 are assembled;
FIG. 6 shows a detailed view in perspective of the way parts 1, 2 and 3 are assembled;
FIG. 7 is a view in perspective of a frozen confection product embodying the rotating device and
FIG. 8 is a view in perspective of an alternative frozen confection product embodying the rotating device.

### Description of preferred embodiments

The rotating device comprises three parts.

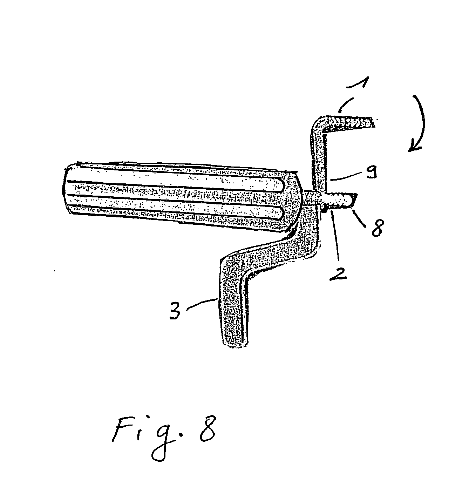

As a first part the holder-stick 2 is made of resilient moulded plastics and comprises an elongated body of general cruciform section with radial circle elements 4 which serve to anchor the stick into a frozen confection mass 5 (Fig. 7, 8). Near to one of its ends the holder stick 2 is in the form of a grooved peg 6 with a oval slot 7 inside.

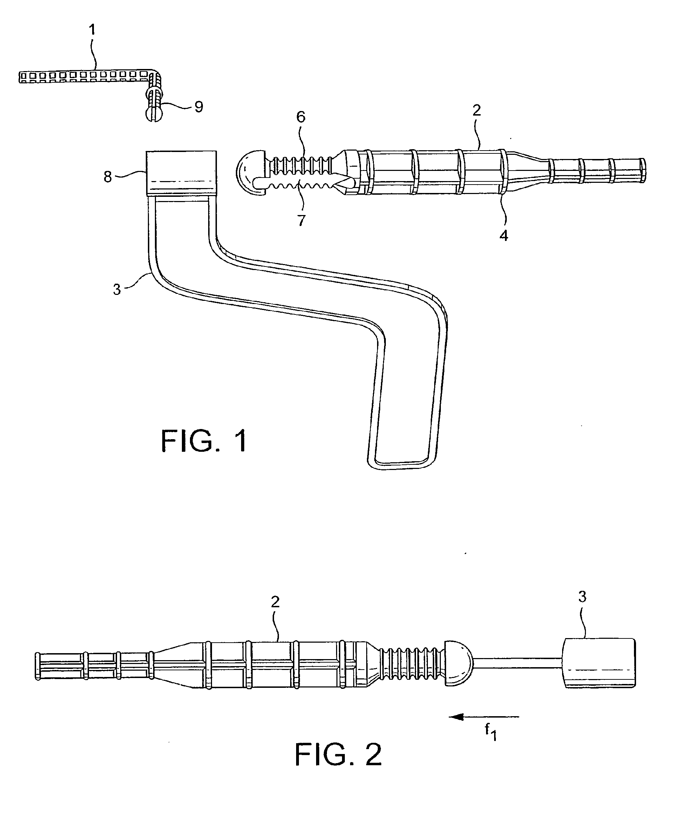

A second part, the handle 3 is S shaped and generally flat with a hollow cylindrical end 8 which serves as a bearing for the holder-stick 2. As shown in Fig. 2, the hollow end 8 is force inserted around the holder- stick 2 as shown with the arrow f1, so that the holder-stick is rotatably fixed to the handle 3 and can rotate freely inside it.

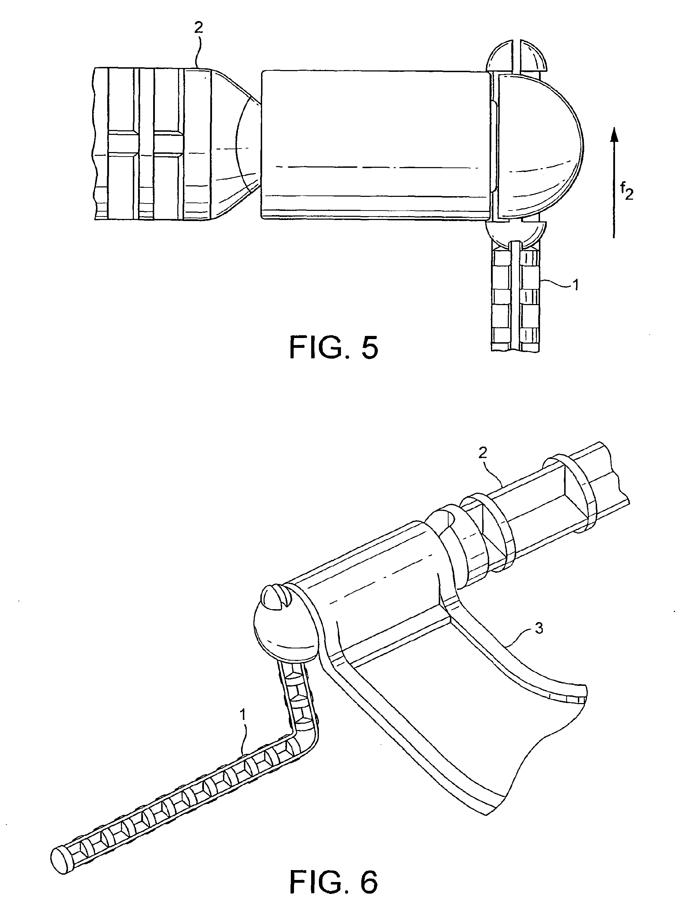

As shown in Fig. 1, a third part, the crank 1 is L shaped and the shorter branch of the L is terminated with a slotted peg 9. Fig 5 indicates the way the crank 1 is fixedly inserted into the hole 7 of the holder-stick 2, in a direction perpendicular to the length of the holder-stick 2, as shown with the arrow f2.

A quasi-cylindrical frozen confection body 5 (Fig. 7) is moulded around the holder stick 2 using a conventional stick moulding machine using the steps of filling the moulds travelling into a refrigerated medium with a composition for water ice, vertically inserting the holder- stick 2 when the composition is in semisolid state, continuing cooling the mould containing the composition for water ice until it is solid enough for holding the stick in upright position, surface heating the mould, demoulding the lolly and packing it. Preferably, the finished ice lolly is prepacked, e.g. in a flow pack separately from the second and third parts of the rotating device and the separate parts are packed together with the prepacked product, e.g. in a flow pack.

There is a play function in the device of the invention, since the consumer, the kid, receives in addition to the ice lolly two plastic parts, a handle 3 and a crank 1 and is asked to interact with the product in a sense that he has to build the rotating device. For doing so, he first inserts the handle 3 around the stick 2 as shown in Fig. 2 and then the crank with its lower arm into the hole 7 of the holder-stick 2.

Gripping the holder 2 with one hand, supposed that he is left-handed, the consumer acts on the crank 1 with his right hand and thus rotates the ice lolly while consuming it (Fig.7 and 8).

In the embodiment of Fig. 8, the holder-stick 2 is somewhat longer and protrudes from the top surface of the frozen confection body in such a way that it is easier to demould the product in a conventional stick moulding line by gripping the stick. The frozen confection is a striped water ice in two flavours, pinapple and apple. The crank 1 is inserted into the hole 7 in the holder-stick 2, which hole is at a certain distance from the upper end 8 of the stick. The crank 1 is inserted into that hole from the longer arm 9 of the L.

The bottom end of the frozen dessert stick 2 may have a shape which makes it suitable for the fitting of various additional accessories which may convert the frozen dessert stick, after the frozen dessert has been consumed, into a number of toys such as a whisk, a spinning top and rotary and/or flying toys without departing from the spirit of the invention.

## Claims

1. Device for rotating a frozen confection item comprising:
a holder -stick 2 for supporting the frozen confection item fixed to the frozen confection item;
a handle (3) rotatably attached to the holder-stick (2) for holding the frozen confection with one hand and
a crank (1) fixedly attached to the holder-stick (2) for rotating the holder-stick (2) with the other hand.

2. Device according to claim 1, in which the holder-stick (2) is made of resilient moulded plastics and comprises an elongated body of general cruciform section with radial circle elements (4) which serve to anchor the stick (2) into a frozen confection mass (5).

3. Device according to claim 1, in which near to one of its ends the holder- stick (2) is in the form of a grooved peg (6) with a oval slot (7) inside.

4. Device according to claim 1, in which the handle (3) is S shaped and generally flat with a hollow cylindrical end (8) which serves as a bearing for the holder-stick (2), so that said holder-stick (2) is rotatably fixed to the handle (3) and can rotate freely inside it.

5. Device according to claim 3, in which the crank (1) is L shaped and one branch of the L is terminated with a slotted peg (9), and is fixedly inserted into the oval slot of the holder-stick (2), in a direction perpendicular to the length of the holder-stick (2).

6. Packaged frozen confection product comprising:
a frozen confection item (5);
a holder-stick (2) for supporting the frozen confection item fixed to the frozen confection item;
in combination with:
a handle (3) rotatably attachable to the holder-stick (2) for holding the frozen confection with one hand and
a crank (1) fixedly attachable to the holder-stick (2) for rotating the holder-stick (2) with the other hand.

7. A product according to claim 6, in which the frozen confection item is a water ice stick (2).

8. A product according to claim 6 or 7, prepacked separately from the handle (3) (3) and the crank (1).

## Patentansprüche

1. Vorrichtung zum Drehen eines gefrorenen Konfektartikels mit:
einem an dem gefrorenen Konfektartikel befestigten Haltestiel (2) zum Tragen des gefrorenen Konfektartikels;
einem drehbar an dem Haltestiel (2) angebrachten Griff (3) zum Halten des gefrorenen Konfekts mit einer Hand und
einer fest an dem Haltestiel (2) angebrachten Kurbel (1) zum Drehen des Haltestiels (2) mit der anderen Hand.

2. Vorrichtung gemäß Anspruch 1, bei der der Haltestiel (2) aus biegsamen, geformten Kunststoffen besteht und einen länglichen Körper aus einem im Allgemeinen kreuzförmigen Abschnitt mit radialen Kreiselementen (4) umfasst, die zur Verankerung des Stiels (2) in einer gefrorenen Konfektmasse (5) dienen.

3. Vorrichtung gemäß Anspruch 1, bei welcher der Haltestiel (2) nahe einem seiner Enden die Form eines Rillenzapfens (6) mit einem darin ausgebildeten ovalen Schlitz (7) aufweist.

4. Vorrichtung gemäß Anspruch 1, bei welcher der Griff (3) S-förmig und im Allgemeinen flach mit einem hohlzylindrischen Ende (8) ausgebildet ist, das als Lagerung für den Haltestiel (2) dient, so dass der Haltestiel (2) drehbar an dem Griff (3) befestigt ist und sich frei in diesem drehen kann.

5. Vorrichtung gemäß Anspruch 3, bei welcher die Kurbel (1) L-förmig ausgebildet ist und ein Arm des L in einem geschlitzten Zapfen (9) endet sowie fest in den ovalen Schlitz des Haltestiels (2) in einer Richtung senkrecht zur Länge des Haltestiels (2) eingesetzt ist.

6. Verpacktes, gefrorenes Konfektprodukt mit:
einem gefrorenen Konfektartikel (5);
einem an dem gefrorenen Konfektartikel befestigten Haltestiel (2) zum Tragen des gefrorenen Konfektartikels;
in Verbindung mit:
einem drehbar an dem Haltestiel (2) anbringbaren Griff (3) zum Halten des gefrorenen Konfekts mit einer Hand und
einer fest an dem Haltestiel (2) anbringbaren Kurbel (1) zum Drehen des Haltestiels (2) mit der anderen Hand.

7. Produkt gemäß Anspruch 6, bei dem der gefrorene Konfektartikel aus einem Wassereisstäbchen (2) besteht.

8. Produkt gemäß Anspruch 6 oder 7, das getrennt von dem Griff (3) und der Kurbel (1) vorverpackt ist.

## Revendications

1. Dispositif pour faire tourner un article de confiserie glacée comprenant :
un bâton support (2) pour maintenir l'article de confiserie glacée, le bâton support étant fixé à l'article de confiserie glacée ;
une poignée (3) fixée en rotation au bâton support (2) pour permettre de tenir la confiserie glacée avec une main et
une manivelle (1) fixée fermement au bâton support (2) pour faire tourner le bâton support (2) avec l'autre main.

2. Dispositif selon la revendication 1, dans lequel le bâton support (2) est fabriqué en matières plastiques moulées élastiques et comprend un corps allongé ayant une coupe en général cruciforme avec des éléments (4) circulaires radiaux qui servent à ancrer le bâton (2) à l'intérieur d'une masse (5) de confiserie glacée.

3. Dispositif selon la revendication 1, dans lequel, à proximité de l'une de ses extrémités, le bâton support (2) est de la forme d'une cheville (6) rainurée avec une ouverture (7) ovale à l'intérieure.

4. Dispositif selon la revendication 1, dans lequel la poignée (3) est de la forme d'un S et est en général plate avec une extrémité (8) cylindrique creuse qui sert de support pour le bâton support (2), de sorte que ledit bâton support (2) est fixé en rotation à la poignée (3) et peut tourner librement à l'intérieur de celle-ci.

5. Dispositif selon la revendication 3, dans lequel la manivelle (1) est de la forme d'un L et une branche du L se termine avec une cheville (9) rainurée, et est insérée fixement à l'intérieur de l'ouverture ovale du bâton support (2), dans une direction perpendiculaire à la longueur du bâton support (2).

6. Produit de confiserie glacée emballé comprenant :
un article (5) de confiserie glacée ;
un bâton support (2) pour maintenir l'article de confiserie glacée, le bâton support étant fixé à l'article de confiserie glacée ;
en combinaison avec :
une poignée (3) susceptible d'être fixée en rotation au bâton support (2) pour permettre de tenir la confiserie glacée avec une main et
une manivelle (1) susceptible d'être fixée fermement au bâton support (2) pour faire tourner le bâton support (2) avec l'autre main.

7. Un produit selon la revendication 6, dans lequel l'article de confiserie glacée est un bâton (2) de glace à eau.

8. Un produit selon la revendication 6 ou 7, préemballé séparément de la poignée (3) et de la manivelle (1).
